# EUROPEAN PATENT SPECIFICATION

(11) **EP 2 071 764 B1**
(45) Date of publication and mention of the grant of the patent: **03.04.2013**
(21) Application number: 07800781.2
(22) Date of filing: 24.08.2007
(51) Int. Cl.: H04L 12/24

(54) **A METHOD, DEVICE AND COMMUNICATION SYSTEM THEREOF OF ELECTING LOCAL MASTER**
VERFAHREN, EINRICHTUNG UND KOMMUNIKATIONSSYSTEM FÜR DAS WÄHLEN EINES LOKALEN MASTERS
PROCÉDÉ, DISPOSITIF ET SYSTÈME DE COMMUNICATION CORRESPONDANT DE SÉLECTION DE MAÎTRE LOCAL

(30) Priority: 28.09.2006 CN 200610141022; 12.03.2007 CN 200710080099
(43) Date of publication of application: 17.06.2009
(73) Proprietor: Huawei Technologies Co., Ltd., Longgang District, Shenzhen Guangdong 518129 (CN)
(72) Inventor: ZHOU, Haojun, Shenzhen, Guangdong 518129 (CN); CHEN, Dagang, Shenzhen, Guangdong 518129 (CN); FENG, Wenjie, Shenzhen, Guangdong 518129 (CN); LI, Yimin, Shenzhen, Guangdong 518129 (CN); ZHOU, Zhipeng, Shenzhen, Guangdong 518129 (CN)
(74) Representative: Thun, Clemens
(86) International application number: PCT/CN2007/002562
(87) International publication number: WO 2008/037174

(56) References cited:
- WO-A1-02/084951
- CN-A- 1 585 357
- US-A1- 2002 107 935
- US-A1- 2003 055 971
- US-B1- 6 363 416
- US-B1- 6 981 025
- SO Y-P ET AL: "Distributed Big Brother" PROCEEDINGS OF THE CONFERENCE ON ARTIFICIAL INTELLIGENCE APPLICATIONS. MONTEREY, MAR. 2 - 6, 1992; [PROCEEDINGS OF THE CONFERENCE ON ARTIFICIAL INTELLIGENCE APPLICATIONS], LOS ALAMITOS, IEEE COMP. SOC. PRESS, US, vol. CONF. 8, 2 March 1992 (1992-03-02), pages 295-301, XP010027450 ISBN: 978-0-8186-2690-6

## Description

### FIELD OF THE INVENTION

The present invention relates to the technical field of communications, and in particular, to a method, a device and a system for electing a local master (LM).

### BACKGROUND OF THE INVENTION

Domain is a collection of a set of devices. In many content protection systems, the use of contents is restricted within domain; in other words, devices in the same domain may easily share and use the digital contents, such as movie and music, in the domain, while devices outside the domain cannot access these digital contents. By using a domain, it may not only prevent the uncontrolled duplication and use of the contents, but also give a certain degree of convenience to the sharing of the contents among devices.

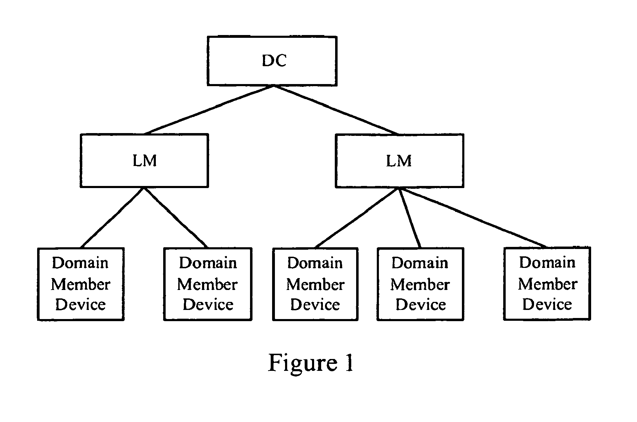

The domain is commonly used in a home network where the domain consists of the devices of a user, so that contents in the domain may be used freely on any device. These devices may be distributed in different geographic locations; for example, if a user has a local area network in his home in Nanjing and another local area network in his home in Beijing, the user may add the devices in both of the local area networks into the same domain. All the devices are managed by the same Domain Controller (DC), which is adapted to control a device to add in or leave a domain and update the related information of the domain. Furthermore, each of the local area networks has a local master (LM), which is dedicated for providing services to domain members in the local area network. For example, the devices may query the current information of the domain from the LM; the LM may also act as a bridge between the devices and the DC, and the device may indirectly interact with the DC via the LM to add in or leave the domain, etc. The basic structure of a domain is shown in Figure 1.

The LM is also a domain member. When the LM in a certain local area network is unable to provide services, for example, when the LM fails, shuts down or quits the domain, other currently available domain members in the local area network need to re-elect a new LM. The LM election process may be carried out automatically without human intervention.

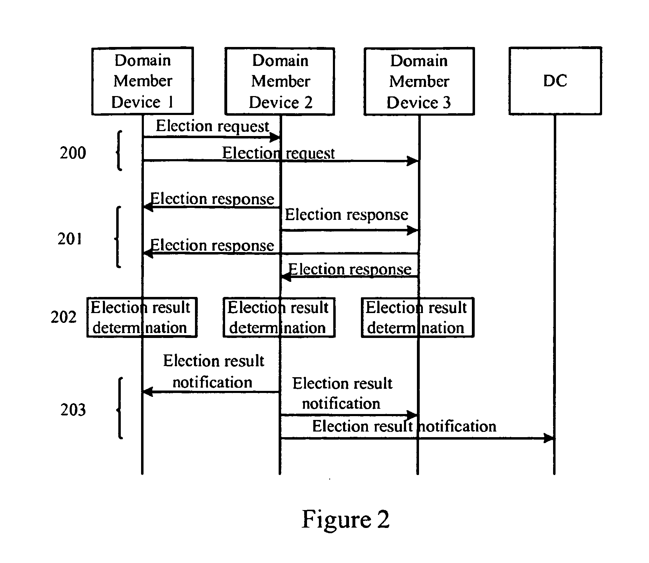

The process for automatically electing a new LM in the conventional art is as shown in Figure 2; in Step 200, when finding that the LM is absent, domain member device 1 in a certain local area network initiates an election request, which is delivered to domain member device 2 and domain member device 3 via a broadcast message; in Step 201, both member device 2 and member device 3 belonging to the same domain in the local area network respond to the election request and broadcast the response message which includes a capability value of the current device to serve as an LM, which is an integer value designated for the device by the device manufacturer based on the function and capability of the device, as an index for determining whether the device is qualified for an LM; in Step 202, domain member device 1, domain member device 2 and domain member device 3 collect the response messages from other members for a certain period of time, and then determine whether itself is the device with the strongest capability, if it is the one with the strongest LM capability, it automatically becomes the new LM; if there exists several devices with the same capability value, the device with the smallest device ID becomes the new LM; and in Step 203, domain member device 2 with the strongest LM capability broadcasts the result to other domain members and notifies the DC via a point-to-point message.

Although in the conventional art, when the LM is unable to provide services, a new LM may be automatically elected, each domain member device receiving the election request message has to broadcast the response message, and each domain member device need to determine whether it is the new LM based on the capability values of other member devices. This not only occupies a large amount of system resources, but also lowers the processing efficiency of the device.

US 6363416 B1 (NAEIMI RAMIN [US] ET AL) discloses a system and method for automatic election a representative node within a communication network with built-in redundancy. In a communication network where data is distributed from a central location to multiple nodes, the present invention enables one of the nodes to be automatically identified as a master of the nodes for retrieving data from the central location and then transmitting the data to all peer nodes interested in receiving the data.

### SUMMARY OF THE INVENTION

Embodiments of the invention provide a method and a device for electing an LM, thereby solving the problem in the conventional art that a large amount of system resources are occupied when electing an LM, and further solving the problem in the conventional art that the processing efficiency of the device is influenced.

A method for electing an LM includes the following steps:

a domain member device in a domain initiates a request message for electing an LM which carries LM capability information of the initiating device;

another domain member device in the domain that receives the request message compares the capability of itself with that of the initiating domain member device; and sends a response message carrying the LM capability information of itself when determining that the LM capability of itself is stronger than that of the initiating device; and

the device with the strongest LM capability among the initiating device and all the domain member devices sending the response message sends an election result notification message to other domain member devices.

A method for automatically electing an LM includes the following steps:

a domain member device in a domain initiates a request message for electing an LM;

another domain member device in the domain sends a response message carrying the LM capability information of itself according to the request message; and

the initiating domain member device elects a domain member device with the strongest LM capability to be the LM in the domain according to the response message received.

A communication device includes:

a module for sending to another device a request message for electing an LM, which carries the LM capability information of the communication device;

a module for comparing the LM capability of the communication device with that of another device sending the request message after receiving the request message from the another device;

a module for sending a response message carrying the LM capability information of the communication device when determining that the LM capability of the communication device is stronger than that of the domain member device sending the request message; and

a module for electing a device with the strongest LM capability to be the LM in the domain among the communication device and other devices in the domain.

A communication device includes:

a module for sending to another device a request message for electing an LM;

a module for sending a response message carrying the LM capability information of the communication device after the request message from another device is received;

a module for electing a device with the strongest LM capability to be the LM in the domain among the communication device and other devices in the domain; and

a module for notifying other devices in the domain of the election result.

A communication system includes:

a domain controller, for controlling a device to join in or leave a domain and updating related information of the domain;

an LM connected with the domain controller, for providing services to a user device in the domain; and

a plurality of domain member devices, for initiating, by one of the domain member devices, a request message carrying the LM capability information of itself when it is found out that the LM is unable to provide services; and sending, by another domain member device in the domain that receive the request message, a response message carrying the LM capability information of itself when determining that the LM capability of itself is stronger than that of the domain member device initiating the request message; and electing the domain member device with the strongest LM capability to be the new LM in the domain among the initiating domain member device and other domain member devices sending the response message.

A communication system includes:

a domain controller, for controlling a device to join in or leave a domain and updating related information of the domain;

an LM connected with the domain controller, for providing services to a user device in the domain; and

a plurality of domain member devices, for initiating, by one of the domain member devices, a request message when it is found out that the LM is unable to provide services; and sending, by another domain member device in the domain, a response message carrying the LM capability information of itself based on the request message; and electing, by the initiating domain member device, a domain member device with the strongest LM capability to be the new LM in the domain among the initiating domain member device and the domain member devices sending the response message, and notifying other domain member devices.

In embodiments of the invention, the domain member devices receiving the election request message initiate a response message only when the LM capability of the domain member device is not weaker than or stronger than that of the domain member device initiating the election request message, therefore the number of messages during the LM election process may be reduced and system resources may be saved. Moreover, if the domain member device determines that the LM capability of itself is weaker than that of other devices, this domain member device terminates the processing on the response message, and may process other transactions. As a result, the processing efficiency of the device is improved.

In the embodiments of the invention, after a domain member device initiates an election request message, the domain member devices receiving the election request message return a response message to the initiating domain member device, and the initiating domain member device elects a new LM. Therefore, the processing on the response message by other domain member devices may be reduced, and the efficiency of other domain member devices for processing other transactions may be improved; furthermore, broadcast messages may be greatly reduced, thus a large amount of system resources may be saved.

### BRIEF DESCRIPTION OF THE DRAWINGS

Figure 1 is a schematic diagram showing the basic structure of a domain in the conventional art;

Figure 2 is a flow chart for automatically electing an LM in the conventional art;

Figure 3 and Figure 7 are structural diagrams of a communication system according to one embodiment of the invention;

Figure 4 and Figure 8 are structural diagrams of a domain member device according to one embodiment of the invention;

Figure 5 and Figure 9 are flow charts for a domain member device to elect an LM according to one embodiment of the invention;

Figure 6 and Figure 11 are flow charts of the processing after a domain member device receives an election request message according to one embodiment of the invention; and

Figure 10 is a flow chart of the processing of a domain member device that sends an election request message according to one embodiment of the invention.

### DETAILED DESCRIPTION OF THE EMBODIMENTS

The embodiments of the invention will now be illustrated in detail in conjunction with the drawings.

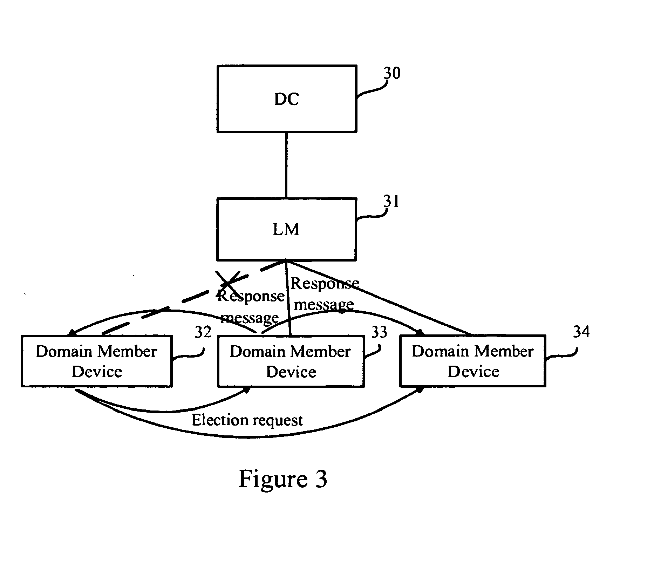

Referring to Figure 3, a communication system includes a Domain Controller (DC) 30, a LM (Local Master) 31 and a plurality of domain member devices 32-34 (not limited to 3 domain member devices). The DC 30 controls a device to add in or leave a domain and updates the related information of the domain; The LM 31 provides services to domain members in the domain, and a domain member device indirectly interacts with the DC 30 via the LM 31 to add in or leave the domain, etc. When finding that the LM 31 is absent, one of the domain member devices 32-34 initiates an election request message, which carries a parameter representing the capability of the initiating device (i.e., the device that sending the election request message) acting as an LM (below referred to as LM capability). After another domain member device receives the election request message, a response message carrying the LM capability of this device is initiated when it is determined that this device is more suitable than the initiating device to act as an LM.

The condition in which the current device is more suitable than the initiating device to act as an LM includes that the LM capability of the current device is not weaker than the LM capability of the initiating device. In a preferred mode, a response message is initiated when it is determined that the LM capability of the current device is stronger than that of the domain member device initiating the request message, thereby the number of messages may be reduced and resources may be saved; when the LM capabilities of two devices are the same, whether to initiate a response message may be determined according to other rules; for example, a response message is initiated when the device ID is less than the device ID of the domain member that initiates the request message. As shown in Figure 3, after the domain member device 32 initiates an election request message, the domain member device 34 does not initiate a response message since it is determined its LM capability is weaker than that of the domain member device 32; however, the domain member device 33 initiates a response message since it is determined that its capability is stronger than that of the domain member device 32.

In many cases, the domain member devices may regard that the LM 31 is absent. For example, if no response message is received when a domain member device requests of LM 31 a certain operation, the domain member device may regard that the LM is absent, thereby initiating an election request. In another example, if a domain member device does not receive a heartbeat message from LM 31 in a given period of time (LM 31 needs to periodically broadcast a heartbeat message in the domain for indicating its existence), the domain member device may also regard that the LM is absent, thereby initiating an election request. To prevent that a plurality of domain member devices from initiating a request at the same time to avoid the unnecessary processing made by the domain member devices, when it is found out that the LM 31 is absent and an election request message needs to be initiated, the domain member device randomly elects a time to initiate the message within a given period of time. After the first domain member device initiates an election request message, other domain member devices that need to initiate an election request message cancel the initiating of an election request message when receiving the election request message.

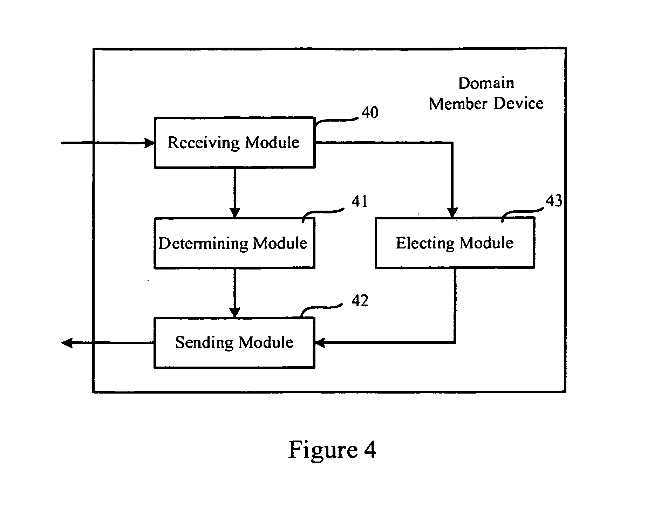

The structure of a domain member device in this embodiment is shown in Figure 4. The domain member device includes: a receiving module 40, a determining module 41, a sending module 42 and an electing module 43. In particular, the sending module 42 is adapted to send an election request message carrying the LM capability parameter of the current device to other domain member devices, send a corresponding response message, and to send an election result, etc.; the receiving module 40 is adapted to receive the election request message and response message sent from other domain member devices; the determining module 41 is adapted to compare the LM capability of the current device with that of the domain member device sending the request message after the receiving module 40 receives the election request message, and control the sending module 42 to send the response message to other domain member devices when it is determined that the current device is more suitable than the initiating device to act as an LM; and the electing module 43 is adapted to elect a device with the strongest LM capability from the current device and other domain member devices to act as the LM. The initiating device may sign the request message with its private key, or add hash message authentication code (HMAC) in the request message while the domain key may be used as the HMAC key.

An instance of an initiated election request message carrying the LM capability parameters of a domain member device is as follows:
Message Type: LM election request message
Domain ID: domain_x
Device ID: device_a
Device LM Capability Value: 80
Signature: xxxxxxxxxxxxxxx

Particularly, Domain ID is used for designating the domain in which an LM is to be re-elected, and those devices that do not belong to the domain make no further processing when receiving the request message; Device ID is used for identifying a domain member device that initiates an election; LM capability value, which is an integer value and designated to the device by the device manufacturer based on the function and capability of a device, is used for determining whether the domain member device is qualified to be an LM, and the greater LM capability value represents the stronger capability. However, LM capability value may also be a combination of a set of parameters, for example, whether the device may be connected to a wide area network, the CPU speed and CPU utilization rate of the device, etc. When comparing the LM capabilities, various factors may be considered comprehensively. Various parameters have different weights. For example, the parameter indicating whether the device may be connected to a wide area network is considered preferentially, and the LM capability of a device that may be connected to a wide area network is stronger than that of a device which may not be connected to a wide area network. For two devices with the same connection capabilities, the CPU speed and CPU utilization rate and so on are compared. Signature is used by other devices to verify the integrity of the message. The private key of the device may be used for signing the message digitally. However, hash message authentication code (HMAC) may also be used to verify the integrity, and the domain key may be used as HMAC key..

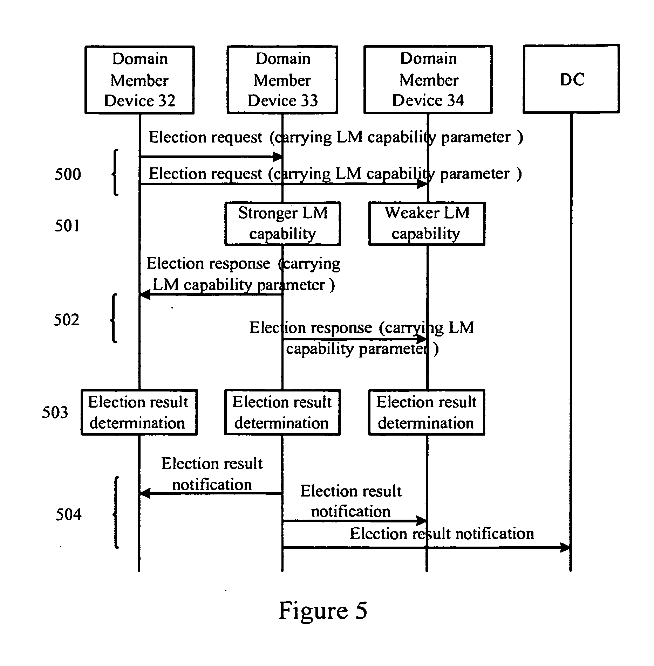

Referring to Figure 5, a specific flow for automatically electing an LM in this embodiment is as follows:

in Step 500, when it is found out that the LM is absent, the domain member device 32 broadcasts an election request message carrying the LM capability parameter of itself;

in Step 501, when receiving the election request message, domain member devices 33 and 34 compare their LM capabilities with that of the domain member device 32 respectively;

in Step 502, the LM capability of the domain member device 33 is stronger than that of the domain member device 32, thus the domain member device 33 broadcasts a response message carrying the LM capability parameter of itself; the LM capability of the domain member device 34 is weaker than that of the domain member device 32, thus the domain member device 34 makes no response to the election request message;

in Step 503, after receiving the response message, the domain member devices 32-34 determine the domain member device with the strongest LM capability and regard it as the new LM. In this example, the LM capability of the domain member device 33 is the strongest, thus it becomes the new LM; and

in Step 504, the domain member device 33 broadcasts the election result notification message to other domain member devices. After receiving the election result notification, the domain member devices record locally that the domain member device 33 acts as the LM.

As required practically, the domain member device 33 may also notify DC 30 of the election result.

It should be understood by an ordinary skilled in the art that, the operations of each domain member device described in the above Step 500 to Step 504 do not represent that these operations are implemented at the same time; for example, the response messages from different domain member devices may be initiated at different time.

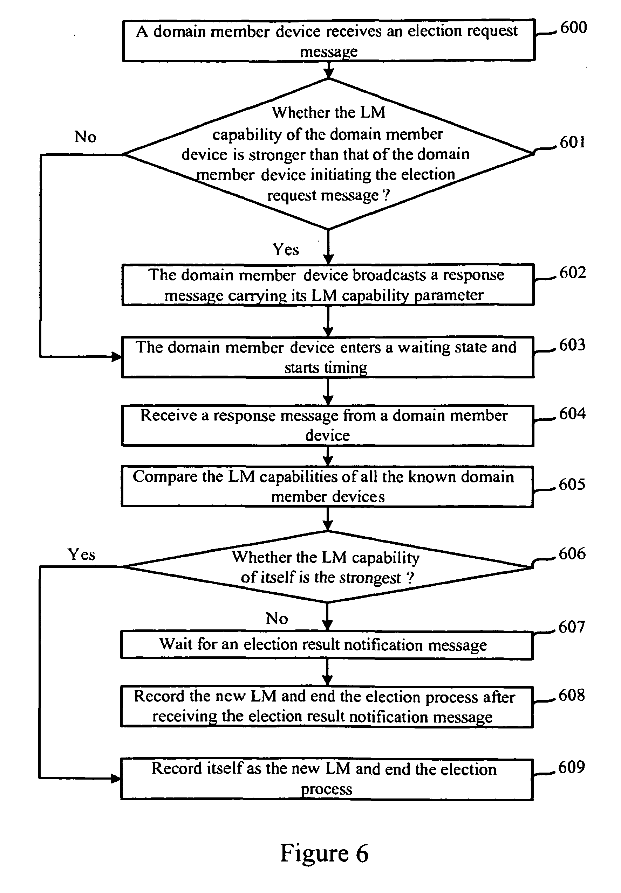

Referring to Figure 6, the processing flow after a domain member device receives an election request message is as follows:

in Step 600, a domain member device receives an election request message;

in Step 601, the domain member device first determines whether the LM capability of itself is stronger than that of the domain member device initiating the election request message, if yes, it proceeds to Step 602; otherwise, it proceeds to Step 603;

in Step 602, the domain member device broadcasts a response message carrying the LM capability parameter of itself;

in Step 603, the domain member device enters a waiting state and starts timing;

in Step 604, in the waiting state, the domain member device may receive one or more response messages sent from other devices, and the domain member device may locally buffer these response messages or the LM capability parameters thereof;

in Step 605, after a given time is exceeded, the domain member device starts to compare the LM capabilities of all the known domain member devices, and determines the domain member device with the strongest LM capability,

however, the domain member device may also determine immediately whether the domain member device is the device with the strongest LM capability currently after receiving the response message from other domain member devices, and update the device with strong LM capability to be a candidate of the LM; when the time runs out, the current LM candidate becomes the new LM elected by all the known domain member devices; in this way, the current device is not necessary to buffer all the response messages received or the LM capability parameters thereof;

in Step 606, the domain member device determines whether the LM capability of itself is the strongest, if yes, it proceeds to Step 609; otherwise, it proceeds to Step 607;

in Step 607, it waits for an election result notification message;

in Step 608, after the election result notification message is received, the new LM (for example, the ID of the domain member device, etc.) is recorded, and the election process ends; and

in Step 609, the domain member device records that itself becomes the new LM, then broadcasts the election result to other devices, and the election process ends.

The domain member device initiating the election request message turns to Step 603 of the above process immediately after sending the election request message. The subsequent process is the same as the above process, and will not be described here again.

In a preferred implementation, once a domain member device determines that the LM capability of another domain member device is stronger than its own LM capability from the election request message or the response message of other domain member devices, the process for determining the election result may be terminated; the election response messages received subsequently are not be processed, and the election result notification message received is simply recorded. In this way, the domain member devices with weak capabilities may process other transactions, so that the processing efficiency of these devices may be improved greatly.

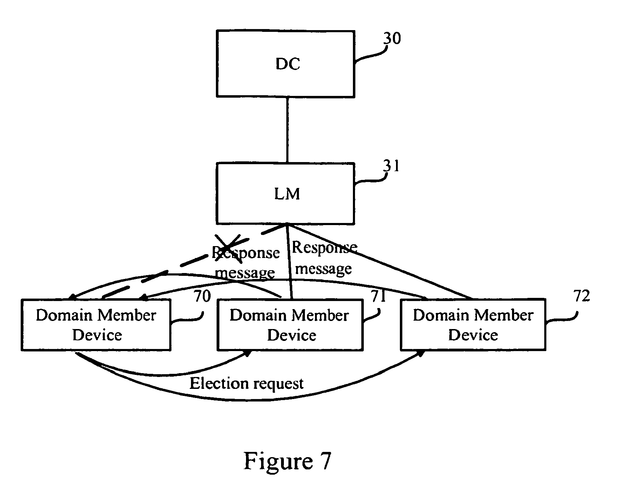

In another embodiment, it may be determined by the domain member device initiating the election request message which domain member device will become the new LM, and the result will be broadcasted to all devices in the domain. Figure 7 shows a communication system where the action and function of the DC 30 and LM 31 are the same as those in Figure 3. Domain member device 70 broadcasts an election request message; after receiving the election request message, the domain member devices 71 and 72 send a response message carrying the LM capability parameter of themselves as required; and the domain member device 70 elects a domain member device with the strongest LM capability to be the LM according to the response message received.

If the LM capability parameter is carried in the election request message, the domain member devices 71 and 72 that receive the election request message first determine whether their LM capability is stronger than that of the domain member device 70, if yes, a response message is initiated; otherwise, no response is made. If no LM capability parameter is carried in the election request message, all the domain member devices receiving the election request message initiate a response message. The response message may be sent to the domain member device 70 in broadcast mode. Preferably, the response message may be sent to the domain member device 70 in point-to-point connection mode.

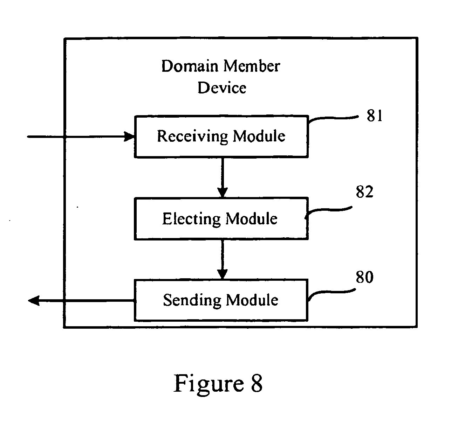

Figure 8 shows the structure of a domain member device, which includes a sending module 80, a receiving module 81 and an electing module 82. Particularly, the sending module 80 sends an election request message and an election result notification message, etc., to other domain member devices; the receiving module 81 receives the election request message and a response message sent from other domain member devices; and the electing module 82 elects a device with the strongest LM capability from the current device and other domain member devices sending the response message as the LM.

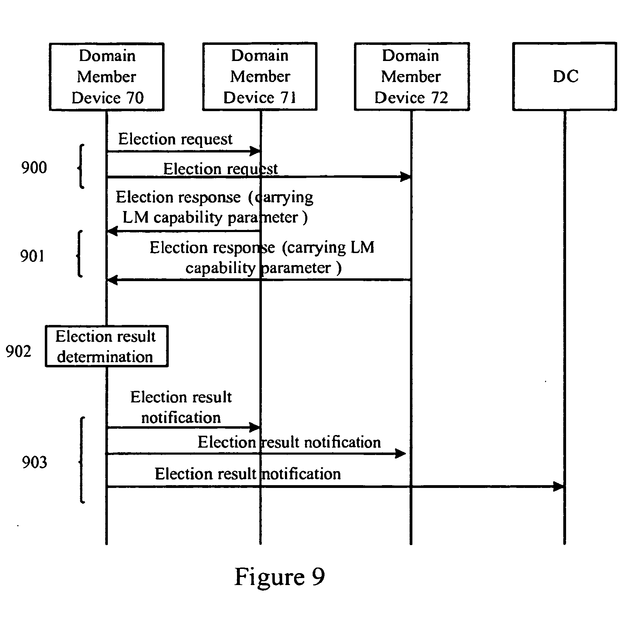

Referring to Figure 9, a specific flow for automatically electing an LM is as follows:

in Step 900, when it is found out that the LM is absent, the domain member device 70 broadcasts an election request message in the domain;

in Step 901, after receiving the election request message, the domain member devices 71 and 72 return a response message carrying the LM capability parameter of themselves to the domain member device 70;

in Step 902, after a predetermined period of time, the domain member device 70 elects a domain member device with the strongest LM capability according to the response message received, and takes it as the new LM;

in Step 903, the domain member device 70 broadcasts the election result to the domain member devices. If the LM capability of the domain member device 70 is the strongest, it records itself as the new LM locally; otherwise, the domain member device elected as the new LM identifies itself as the LM when receiving a notification message; moreover, other domain member devices save the ID and other information of the domain member device elected as the new LM locally.

As required practically, the domain member device 70 may also notify DC 30 of the election result. However, the domain member device elected as the new LM may also notify DC 30 of the election result.

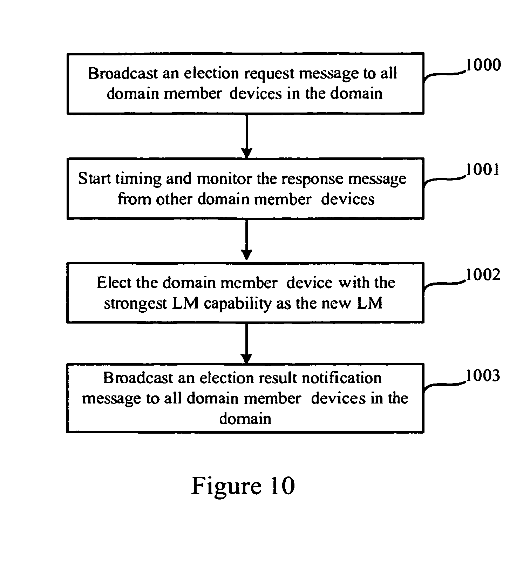

Referring to Figure 10, the process in which the domain member device 70 initiates an election request message is as follows:

in Step 1000, when detecting that the LM is absent currently, the domain member device 70 broadcasts an election request message to all domain member devices in the domain;

in Step 1001, the domain member device 70 starts timing, and monitors the response message from other domain member devices,

when receiving a response message, a device determines whether the message matches the request message by comparing whether the domain IDs are the same or by comparing whether the random parameter carried in the response message is the same as that carried in the request message, etc.; if not matching, the response message is discarded directly; if matching, the message is accepted;

in Step 1002, when the time runs out, the domain member device 70 determines the domain member device with the strongest LM capability based on the response message received and its LM capability, and elects the domain member device as the new LM;

in Step 1003, the domain member device 70 broadcasts an election result notification message to all domain member devices in the domain. The ID of the new LM should be carried in the broadcast message, and the LM capability value thereof may also be carried as required.

The domain member device 70 may also notify DC 30 of the election result.

In the above Step 1001, the domain member device 70 may make a determination on the LM capability immediately when receiving one response message, and take the domain member device with a stronger LM capability currently as the candidate of the LM; then wait for the next response message. When the time runs out, the candidate domain member device becomes the new LM. However, the domain member device 70 may also buffer the response messages received and process them when the time runs out.

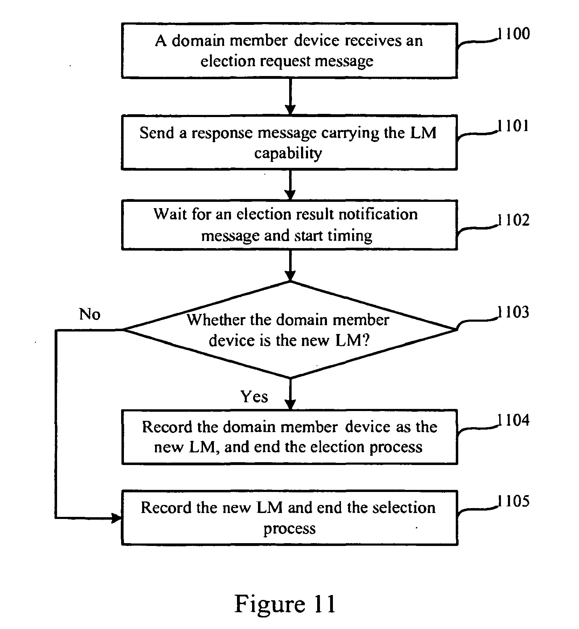

Referring to Figure 11, the processing flow after the domain member device 71 receives an election request message is as follows:

in Step 1100, the domain member device 71 receives an election request message;

in Step 1101, the domain member device 71 returns a response message carrying its LM capability to the domain member device 70;

in Step 1102, the domain member device 71 waits for an election result notification message, and starts timing;

in Step 1103, when receiving the election result, the domain member device 71 determines whether it is the new LM, if yes, it proceeds to Step 1104; otherwise, it proceeds to Step 1105,

if no effective election result is received in a given period of time, it is determined that the current election fails;

in Step 1104, the domain member device 71 records itself as the new LM, further notifies the election result to the DC as required, and the election process ends; and

in Step 1105, the domain member device 71 records the ID of the new LM, and the election process ends.

In Step 1101, if the LM capability parameter is carried in the election request message received by the domain member device 71, the domain member device 71 first compares whether its LM capability is stronger than that of the domain member device 70; if yes, it returns a response message; otherwise, it directly enters a timing stage and waits for the election result. The subsequent process is the same as the above, and will not be described here again.

In the flow of Figure 10, the domain member device 70 that initiates the election request message broadcasts the election result in the domain. In another implementation, the domain member device 70 may also notify the new LM of the election result, and the new LM broadcasts the election result to other devices in the domain. In such a mode, if the domain member device 70 does not receive the response message or the election result notification message (for example, the opposite device suddenly drops off the line or fails), the domain member device with the second strongest capability may be elected to be the new LM, and then repeat the above process till the election process ends.

In the embodiments of the invention, the domain member device receiving the election request message initiates a response message when its LM capability is not weaker than or stronger than that of the domain member device initiating the election request message, therefore the number of messages during the LM election process may be reduced and system resources may be saved. Furthermore, when determining that its LM capability is weaker than that of other devices, the domain member device terminates its processing on the response message; therefore the device may process other transactions. As a result, the processing efficiency of the device may be improved.

In the embodiments of the invention, when a domain member device initiates an election request message, the domain member devices receiving the election request message return a response message to the initiating domain member device, and the initiating domain member device elects a new LM. Therefore, the processing on the response message made by other domain member devices may be reduced, and the efficiency of other domain member devices for processing other transactions may be improved. Further, broadcast messages may be greatly reduced, and a large amount of system resources may be saved.

Obviously, various modifications and variations may be made by those skilled in the art without departing from the scope of the invention. Accordingly, it is intended to encompass these modifications and variations providing these modifications and variations fall within the scope of the invention as defined by the appended claims and their equivalents.

## Claims

1. A method for electing a Local Master, LM (31), comprising:
receiving, by a domain member device in a domain, the domain member device needing to initiate an election message, a request message for electing an LM (31) initiated by another domain member device (32) in the domain,, wherein LM (31) capability information of the initiating device is carried in the request message (501);
comparing, by the domain member device and/or yet another domain member device (33 or 34) in the domain that receives the request message, its capability with that of the initiating device, if it is determined that its LM (31) capability is stronger than that of the initiating device, the domain member device (33) stronger than the initiating device sends a response message carrying its LM (31) capability information (502); and
sending, by the device with the strongest LM (31) capability among the initiating device and all the domain member devices (32-34) stronger than the initiating device that send the response message (503), an election result notification message to domain member devices of the domain, **characterized by**
cancelling, by the domain member device, the initiating of an election request message when receiving the request message.

2. The method according to claim 1, wherein, when it is determined that the LM (31) capability of the another domain member device is the same as that of the initiating device and the device ID of the another domain member device is less than that of the initiating device, the another domain member device sends the response message.

3. The method according to claim 1, wherein, when the LM (31) capabilities of a plurality of domain member devices are the strongest, the device with the smallest device ID among said plurality of domain member devices sends the notification message.

4. The method according to claim 1, wherein, if the initiating device has not received a response message after initiating a request to the old LM (31) or if the initiating device does not receive a heartbeat message from the old LM (31) in a given period of time, it determines that the old LM (31) is absent, and initiates the election request message.

5. The method according to any one of claims 1 to 4, wherein, when time runs out, the domain member device compares its LM (31) capability with that of the domain member device initiating the request message or response message according to the election request message and response message received; or the domain member device compares its LM (31) capability with that of the domain member device initiating the request message or response message when receiving the request message or response message.

6. The method according to claim 5, wherein, the domain member device in the domain terminates the processing on the response message when determining its LM (31) capability is weaker than that of other domain member devices.

7. The method according to claim 1, wherein, a DC in the domain is also notified of the LM (31) in the domain when the LM (31) in the domain is elected.

8. A method for automatically electing a Local Master, LM (31), comprising:
initiating, by a domain member device being an initiating device in a domain, a request message for electing an LM (31) (900);
receiving, by another domain member device in the domain that needs to initiate an election message, the request message;
receiving by the domain member device from the another domain member device, a response message carrying LM (31) capability information of the another domain member device in the domain, in response to the request message (901); and
sending by a domain member device with the strongest LM (31) capability in the domain according to the response message received (902), an election result notification message to other domain member devices, **characterized by** cancelling, by the another domain member device, the initiating of the election request message when receiving the request message.

9. The method according to claim 8, wherein, all the domain member devices receiving the request message initiate the response message; or, the domain member device receiving the request message initiates the response message when determining that its LM (31) capability is stronger than that of the domain member device initiating the request message according to the LM (31) capability information carried in the request message.

10. The method according to any one of claims 8 to 9, wherein, the domain member device notifies other domain member devices in the domain of the election result; or, the domain member device notifies the domain member device elected as the LM (31) of the election result, and the domain member device elected as the LM (31) notifies other domain member devices of the election result (903).

11. The method according to claim 8, wherein, when determining that a request message for electing an LM (31) needs to be sent, the domain member device in the domain randomly elects a time for initiating the request message within a given period of time; furthermore, the domain member device, which determines that a request message for electing an LM (31) needs to be sent, cancels the initiating of the request message when receiving the request message sent from another domain member device.

12. A communication device, comprising:
a module (40) for receiving a request message for electing a Local Master, LM (31), from a domain member device in a domain as an initiated device, wherein LM (31) capability information of the initiating device is carried in the request message;
a module (41) for comparing the LM (31) capability of the communication device with that of the initiating device after receiving the request message from the initiating device;
a module (42) for sending a response message carrying the LM (31) capability information of the communication device when determining the LM (31) capability of the communication device is stronger than that of the initiating device; and
a module (43) for electing a device with the strongest LM (31) capability to be the LM (31) in the domain among the communication device and other devices in the domain; **characterized in that** the communication device is further adapted to cancel the initiating of an election request message when receiving the request message.

13. The communication device according to claim 12, further comprising:
a module for sending an election result notification message for notifying other devices in the domain of the election result.

14. A communication device, comprising:
a module for initiating a request message for electing a Local Master, LM (31);
a module (81) for receiving, from another domain member device, a response message carrying LM (31) capability information of the another domain member device in response to the request message;
a module (82) for electing a device with the strongest LM (31) capability to be the LM (31) in the domain among the communication device and other devices in the domain;
a module for sending an election result notification message for notifying other devices in the domain of the election result; **characterized in that** the communication device is further adapted to cancel the initiating of an
election request message when receiving the request message.

## Patentansprüche

1. Verfahren zum Wählen eines lokalen Master, LM (31), mit den folgenden Schritten:
eine Domänenmitgliedseinrichtung in einer Domäne, wobei die Domänenmitgliedseinrichtung eine Wahlnachricht einleiten muss, empfängt eine Anforderungsnachricht zum Wählen eines LM (31), die durch eine andere Domänenmitgliedseinrichtung (32) in der Domäne eingeleitet wird, wobei Fähigkeitsinformationen des LM (31) der einleitenden Einrichtung in der Anforderungsnachricht geführt werden (501);
die Domänenmitgliedseinrichtung und/oder eine weitere Domänenmitgliedseinrichtung (33 oder 34) in der Domäne, die die Anforderungsnachricht empfängt, vergleicht ihre Fähigkeit mit der der einleitenden Einrichtung, und wenn bestimmt wird, dass ihre Fähigkeit des LM (31) stärker als die der einleitenden Einrichtung ist, sendet die Domänenmitgliedseinrichtung (33), die stärker als die einleitende Einrichtung ist, eine Antwortnachricht, die ihre Fähigkeitsinformationen des LM (31) führt (502); und
die Einrichtung mit der stärksten Fähigkeit des LM (31) unter der einleitenden Einrichtung und allen Domänenmitgliedseinrichtungen (32-34), die stärker als die einleitende Einrichtung ist, die die Antwortnachricht (503) senden, sendet eine Wahlergebnis-Benachrichtigungsnachricht zu Domänenmitgliedseinrichtungen der Domäne, **gekennzeichnet durch**
Abbrechen des Einleitens einer Wählanforderungsnachricht **durch** die Domänenmitgliedseinrichtung, wenn die Anforderungsnachricht empfangen wird.

2. Verfahren nach Anspruch 1, wobei, wenn bestimmt wird, dass die Fähigkeit des LM (31) der anderen Domänenmitgliedseinrichtung dieselbe wie die der einleitenden Einrichtung ist und die Einrichtungs-ID der anderen Domänenmitgliedseinrichtung kleiner als die der einleitenden Einrichtung ist, die andere Domänenmitgliedseinrichtung die Antwortnachricht sendet.

3. Verfahren nach Anspruch 1, wobei, wenn die Fähigkeiten des LM (31) einer Vielzahl von Domänenmitgliedseinrichtungen die stärksten sind, die Einrichtung mit der kleinsten Einrichtungs-ID unter der Vielzahl von Domänenmitgliedseinrichtungen die Benachrichtigungsnachricht sendet.

4. Verfahren nach Anspruch 1, wobei, wenn die einleitende Einrichtung nach dem Einleiten einer Anforderung an den alten LM (31) keine Antwortnachricht empfangen hat oder wenn die einleitende Einrichtung in einem gegebenen Zeitraum keine Heartbeat-Nachricht von dem alten LM (31) empfängt, sie bestimmt, dass der alte LM (31) abwesend ist, und eine Wählanforderungsnachricht einleitet.

5. Verfahren nach einem der Ansprüche 1 bis 4, wobei, wenn die Zeit ausgeht, die Domänenmitgliedseinrichtung gemäß der Wählanforderungsnachricht und der Antwortnachricht, die empfangen wird, ihre Fähigkeit des LM (31) mit der der Domänenmitgliedseinrichtung vergleicht, die die Anforderungsnachricht oder Antwortnachricht einleitet; oder die Domänenmitgliedseinrichtung ihre Fähigkeit des LM (31) mit der der Domänenmitgliedseinrichtung vergleicht, die die Anforderungsnachricht oder Antwortnachricht einleitet, wenn die Anforderungsnachricht oder Antwortnachricht empfangen wird.

6. Verfahren nach Anspruch 5, wobei die Domänenmitgliedseinrichtung in der Domäne die Verarbeitung an der Antwortnachricht beendet, wenn bestimmt wird, dass ihre Fähigkeit des LM (31) schwächer als die von anderen Domänenmitgliedseinrichtungen ist.

7. Verfahren nach Anspruch 1, wobei außerdem eine DC in der Domäne über den LM (31) in der Domäne benachrichtigt wird, wenn der LM (31) in der Domäne gewählt wird.

8. Verfahren zum automatischen Wählen eines lokalen Master, LM (31), umfassend:
Einleiten einer Anforderungsnachricht zum Wählen eines LM (31) durch eine Domänenmitgliedseinrichtung, die eine einleitende Einrichtung in einer Domäne ist (900);
Empfangen der Anforderungsnachricht durch eine andere Domänenmitgliedseinrichtung in der Domäne, die eine Wählnachricht einleiten muss;
Empfangen einer Antwortnachricht durch die Domänenmitgliedseinrichtung von der anderen Domänenmitgliedseinrichtung, die Fähigkeitsinformationen des LM (31) der anderen Domänenmitgliedseinrichtung in der Domäne führt, als Reaktion auf die Anforderungsnachricht (901); und
Senden einer Wahlergebnis-Benachrichtigungsnachricht zu anderen Domänenmitgliedseinrichtungen durch eine Domänenmitgliedseinrichtung mit der stärksten Fähigkeit des LM (31) in der Domäne gemäß der empfangenen Antwortnachricht (902), **gekennzeichnet durch**
Abbrechen des Einleitens der Wahlanforderungsnachricht **durch** die andere Domänenmitgliedseinrichtung, wenn die Anforderungsnachricht empfangen wird.

9. Verfahren nach Anspruch 8, wobei alle Domänenmitgliedseinrichtungen, die die Anforderungsnachricht empfangen, die Antwortnachricht einleiten; oder die Domänenmitgliedseinrichtung, die die Anforderungsnachricht empfängt, die Antwortnachricht einleitet, wenn gemäß den in der Anforderungsnachricht geführten Fähigkeitsinformationen des LM (31) bestimmt wird, dass ihre Fähigkeit des LM (31) stärker als die der Domänenmitgliedseinrichtung ist, die die Anforderungsnachricht einleitet.

10. Verfahren nach einem der Ansprüche 8 bis 9, wobei die Domänenmitgliedseinrichtung andere Domänenmitgliedseinrichtungen in der Domäne über das Wahlergebnis benachrichtigt, oder die Domänenmitgliedseinrichtung die als den LM (31) des Wahlergebnisses gewählte Domänenmitgliedseinrichtung benachrichtigt und die als LM (31) gewählte Domänenmitgliedseinrichtung andere Domänenmitgliedseinrichtungen über das Wahlergebnis benachrichtigt (903).

11. Verfahren nach Anspruch 8, wobei, wenn bestimmt wird, dass eine Anforderungsnachricht zum Wählen eines LM (31) gesendet werden muss, die Domänenmitgliedseinrichtung in der Domäne zufällig einen Zeitpunkt zum Einleiten der Anforderungsnachricht innerhalb eines gegebenen Zeitraums wählt; und ferner die Domänenmitgliedseinrichtung, die bestimmt, dass eine Anforderungsnachricht zum Wählen eines LM (31) gesendet werden muss, das Einleiten der Anforderungsnachricht abbricht, wenn die von einer anderen Domänenmitgliedseinrichtung gesendete Anforderungsnachricht empfangen wird.

12. Kommunikationseinrichtung, umfassend:
ein Modul (40) zum Empfangen einer Anforderungsnachricht zum Wählen eines lokalen Master LM (31) von einer Domänenmitgliedseinrichtung in einer Domäne als eine eingeleitete Einrichtung, wobei in der Anforderungsnachricht Fähigkeitsinformationen des LM (31) der einleitenden Einrichtung geführt werden;
ein Modul (41) zum Vergleichen der Fähigkeit des LM (31) der Kommunikationseinrichtung mit der der einleitenden Einrichtung nach dem Empfang der Anforderungsnachricht von der einleitenden Einrichtung;
ein Modul (42) zum Senden einer Antwortnachricht, die die Fähigkeitsinformationen des LM (31) der Kommunikationseinrichtung führt, wenn bestimmt wird, dass die Fähigkeit des LM (31) der Kommunikationseinrichtung stärker als die der einleitenden Einrichtung ist; und
ein Modul (43) zum Wählen einer Einrichtung mit der stärksten Fähigkeit des LM (31) als den LM (31) in der Domäne unter der Kommunikationseinrichtung und anderen Einrichtungen in der Domäne,
**dadurch gekennzeichnet, dass** die Kommunikationseinrichtung ferner dafür ausgelegt ist, das Einleiten einer Wahlanforderungsnachricht abzubrechen, wenn die Anforderungsnachricht empfangen wird.

13. Kommunikationseinrichtung nach Anspruch 12, ferner umfassend:
ein Modul zum Senden einer Wahlergebnis-Benachrichtigungsnachricht zum Benachrichtigen anderer Einrichtungen in der Domäne über das Wahlergebnis.

14. Kommunikationseinrichtung, umfassend:
ein Modul zum Einleiten einer Anforderungsnachricht zum Wählen eines lokalen Master, LM (31);
ein Modul (81) zum Empfangen einer Antwortnachricht von einer anderen Domänenmitgliedseinrichtung, die Fähigkeitsinformationen des LM (31) der anderen Domänenmitgliedseinrichtung führt, als Reaktion auf die Anforderungsnachricht;
ein Modul (82) zum Wählen einer Einrichtung mit der stärksten Fähigkeit des LM (31) als den LM (31) in der Domäne unter der Kommunikationseinrichtung und anderen Einrichtungen in der Domäne;
ein Modul zum Senden einer Wahlergebnis-Benachrichtigungsnachricht zum Benachrichtigen anderer Einrichtungen in der Domäne über das Wahlergebnis;
**dadurch gekennzeichnet, dass** die Kommunikationseinrichtung ferner dafür ausgelegt ist, das Einleiten einer Wahlanforderungsnachricht abzubrechen, wenn die Anforderungsnachricht empfangen wird.

## Revendications

1. Procédé de sélection d'un Maître Local, LM (31), comprenant :
la réception, par un dispositif membre du domaine dans un domaine, le dispositif membre du domaine devant lancer un message de sélection, d'un message de requête de sélection d'un LM (31) lancé par un autre dispositif membre du domaine (32) dans le domaine, des informations de capabilité de LM (31) du dispositif demandeur étant incluses dans le message de requête (501) ;
la comparaison, par le dispositif membre du domaine et/ou encore un autre dispositif membre du domaine (33 ou 34) dans le domaine qui reçoit le message de requête, de sa capabilité à celle du dispositif demandeur, s'il est déterminé que sa capabilité de LM (31) est plus forte que celle du dispositif demandeur, le dispositif membre du domaine (33) plus puissant que le dispositif demandeur envoie un message de réponse incluant ses informations de capabilité de LM (31) (502) ; et
l'envoi, par le dispositif ayant la plus forte capabilité de LM (31) parmi le dispositif demandeur et tous les dispositifs membres du domaine (32 -34) plus puissants que le dispositif demandeur qui envoient le message de réponse (503), d'un message de notification de résultat de sélection aux dispositifs membres du domaine dans le domaine, **caractérisé par**
la suppression, par le dispositif membre du domaine, du lancement d'un message de requête de sélection à la réception du message de requête.

2. Procédé selon la revendication 1, dans lequel, quand il est déterminé que la capabilité de LM (31) de l'autre dispositif membre du domaine est identique à celle du dispositif demandeur et que l'ID de dispositif de l'autre dispositif membre du domaine est inférieure à celle du dispositif demandeur, l'autre dispositif membre du domaine envoie le message de réponse.

3. Procédé selon la revendication 1, dans lequel, quand les capabilités de LM (31) d'une pluralité de dispositifs membres du domaine sont les plus fortes, le dispositif ayant la plus petite ID de dispositif parmi ladite pluralité de dispositifs membres du domaine envoie le message de notification.

4. Procédé selon la revendication 1, dans lequel, si le dispositif demandeur n'a pas reçu de message de réponse après le lancement d'une requête auprès de l'ancien LM (31) ou si le dispositif demandeur ne reçoit pas de message de rythme de l'ancien LM (31) dans une période de temps donnée, il détermine que l'ancien LM (31) est absent, et lance le message de requête de sélection.

5. Procédé selon l'une quelconque des revendications 1 à 4, dans lequel, quand le temps s'est écoulé, le dispositif membre du domaine compare sa capabilité de LM (31) à celle du dispositif membre du domaine qui lance le message de requête ou le message de réponse en fonction du message de requête de sélection et du message de réponse reçus ; ou le dispositif membre du domaine compare sa capabilité de LM (31) à celle du dispositif membre du domaine qui lance le message de requête ou le message de réponse quand il reçoit le message de requête ou le message de réponse.

6. Procédé selon la revendication 5, dans lequel le dispositif membre du domaine dans le domaine arrête le traitement sur le message de réponse quand il détermine que sa capabilité de LM (31) est plus faible que celle d'autres dispositifs membres du domaine.

7. Procédé selon la revendication 1, dans lequel un DC dans le domaine est également notifié du LM (31) dans le domaine quand le LM (31) dans le domaine est sélectionné.

8. Procédé de sélection automatique d'un Maître Local, LM (31), comprenant :
le lancement, par un dispositif membre du domaine étant un dispositif demandeur dans un domaine, d'un message de requête de sélection d'un LM (31) (900) ;
la réception, par un autre dispositif membre du domaine dans le domaine qui doit lancer un message de sélection, du message de requête ;
la réception, par le dispositif membre du domaine de l'autre dispositif membre du domaine, d'un message de réponse incluant des informations de capabilité de LM (31) de l'autre dispositif membre du domaine dans le domaine, en réponse au message de requête (901) ; et
l'envoi, par un dispositif membre du domaine ayant la plus forte capabilité de LM (31) dans le domaine en fonction du message de réponse reçu (902), d'un message de notification de résultat de sélection à d'autres dispositifs membres du domaine,
**caractérisé par**
la suppression, par l'autre dispositif membre du domaine, du lancement du message de requête de sélection à la réception du message de requête.

9. Procédé selon la revendication 8, dans lequel tous les dispositifs membres du domaine qui reçoivent le message de requête lancent le message de réponse ; ou le dispositif membre du domaine qui reçoit le message de requête lance le message de réponse quand il est déterminé que sa capabilité de LM (31) est plus forte que celle du dispositif membre du domaine qui lance le message de requête en fonction des informations de capabilité de LM (31) incluses dans le message de requête.

10. Procédé selon l'une quelconque des revendications 8 à 9, dans lequel le dispositif membre du domaine notifie d'autres dispositifs membres du domaine dans le domaine du résultat de sélection ; ou le dispositif membre du domaine notifie le dispositif membre du domaine sélectionné comme LM (31) du résultat de la sélection, et le dispositif membre du domaine sélectionné comme LM (31) notifie les autres dispositifs membres du domaine du résultat de la sélection (903).

11. Procédé selon la revendication 8, dans lequel, quand il est déterminé qu'un message de requête de sélection d'un LM (31) doit être envoyé, le dispositif membre du domaine dans le domaine sélectionne aléatoirement un temps demandeur du message de requête dans une période de temps donnée ; en outre, le dispositif membre du domaine, qui détermine qu'un message de requête de sélection d'un LM (31) doit être envoyé, annule le lancement du message de requête quand il reçoit le message de requête envoyé par un autre dispositif membre du domaine.

12. Dispositif de communication, comprenant :
un module (40) de réception d'un message de requête de sélection d'un Maître Local, LM (31), depuis un dispositif membre du domaine dans un domaine comme dispositif de lancement, des informations de capabilité de LM (31) du dispositif demandeur étant incluses dans le message de requête ;
un module (41) de comparaison de la capabilité de LM (31) du dispositif de communication à celle du dispositif demandeur après la réception du message de requête depuis le dispositif demandeur ;
un module (42) d'envoi d'un message de réponse incluant les informations de capabilité de LM (31) du dispositif de communication quand il est déterminé que la capabilité de LM (31) du dispositif de communication est plus forte que celle du dispositif demandeur ; et
un module (43) de sélection d'un dispositif ayant la plus forte capabilité de LM (31) comme LM (31) dans le domaine parmi le dispositif de communication et d'autres dispositifs dans le domaine,
**caractérisé en ce que** le dispositif de communication est adapté en outre pour annuler le lancement d'un message de requête de sélection à la réception du message de requête.

13. Procédé selon la revendication 12, comprenant en outre :
un module pour envoyer un message de notification de résultat de sélection pour notifier d'autres dispositifs dans le domaine du résultat de sélection.

14. Dispositif de communication, comprenant :
un module demandeur d'un message de requête pour sélectionner un Maître Local, LM (31) ;
un module (81) dé réception, depuis un autre dispositif membre du domaine, d'un message de réponse incluant des informations de capabilité de LM (31) de l'autre dispositif membre du domaine en réponse au message de requête ;
un module (82) pour sélectionner un dispositif ayant la plus forte capabilité de LM (31) comme LM (31) dans le domaine parmi le dispositif de communication et d'autres dispositifs dans le domaine,
un module d'envoi d'un message de notification de résultat de sélection pour notifier d'autres dispositifs dans le domaine du résultat de sélection,
**caractérisé en ce que** le dispositif de communication est adapté en outre pour annuler le lancement d'un message de requête de sélection à la réception du message de requête.
